# EUROPEAN PATENT APPLICATION

(11) **EP 2 009 878 A2**
(43) Date of publication of application: **31.12.2008**
(21) Application number: 07254657.5
(22) Date of filing: 30.11.2007
(51) Int. Cl.: H04M 1/02

(54) **Electronic device, mobile phone and method of controlling the device**

(30) Priority: 29.06.2007 JP 2007172512
(71) Applicant: Kabushiki Kaisha Toshiba, Minato-ku, Tokyo 105-8001 (JP)
(72) Inventor: Takahashi, Shinya, Tokyo 105-8001 (JP)
(74) Representative: Shindler, Nigel

(57) **Abstract**

An electronic device includes a first body; an operation key provided on the operation surface of the first body; a cover unit that is connected to the first body and that switches between an open state where the operation key is exposed and a closed state where the operation key is covered with the cover unit; an opening-closing detecting unit configured to detect opening and closing of the cover unit; and a key depression determining unit configured to determine that depression of the operation key is effective if the time during which the operation key is pressed exceeds a predetermined determination time. The key depression determining unit sets the determination time to a first determination time if the cover unit is opened and sets the determination time to a second determination time longer than the first determination time if the cover unit is closed.

## Description

### BACKGROUND OF THE INVENTION

### 1. Field of the Invention

The present invention relates to electronic devices, mobile phones, and methods of controlling the electronic devices. More particularly, the present invention relates to a compact mobile phone, an electronic device for the compact mobile phone, and a method of controlling the electronic device.

### 2. Description of the Related Art

Compact portable electronic devices, such as mobile phones and PDAs, are in widespread use in these days.

Many such electronic devices each include a display unit provided with, for example, a liquid crystal display and an operation unit provided with operation keys including a power key and numeric keys. The display unit is arranged at a position where a user can easily view the display unit and the operation unit is arranged at a position where the user can easily operate the operation unit. The display unit and the operation unit are arranged on one body or arranged on separate bodies. For example, the latter case applies to foldable mobile phones. Each foldable mobile phone has an upper body on which the display unit is arranged and a lower body on which the operation unit is arranged. The upper body is foldable on the lower body via a hinge unit.

Electronic devices, such as mobile phones, are typically used in an operation state and in a non-operation state. In the case of the mobile phones, users make calls or create e-mails while viewing the display units in the operation state. The users can access the operation keys at any time in the operation state.

The non-operation state means a state that is inapplicable to the operation state. For example, the non-operation state means a state where users are moving with electronic devices put in their bags or pockets or a state where the users leaves the electronic device untouched for a long time. In the non-operation state, the electronic devices are turned off, or the electronic devices are turned on in a standby mode of mobile phones.

Users do not usually access the operation keys in the non-operation state. However, when the operation keys are exposed outside the bodies of the electronic devices, the operation keys can be unintentionally pressed while the users are moving with the electronic devices put in their bags or pockets to turn off or on the electronic devices without the users' knowledge. In order to avoid such a malfunction, recent mobile phones typically have structures in which the operation keys are not exposed outside in the non-operation state.

For example, flip mobile phones are provided with covers called flippers. The flippers are closed to cover the operation keys in the non-operation state and the flippers are opened in the operation state. Since the operation keys are not exposed outside in the non-operation state because they are covered with the flippers, it is possible to prevent any malfunction unintended by the users. Also in foldable mobile phones, since the operation keys are covered with the upper bodies and are not exposed outside in the non-operation state where the lower bodies are overlaid with the upper bodies, it is possible to prevent any malfunction unintended by the users.

JP-A 05-44217 discloses a technology of strengthening measures against malfunction of operation keys in the non-operation state. JP-A 05-44217 says that, for example, the flipper of a flip mobile phone can be closed with any foreign object sandwiched between the flipper and the operation keys. In such a situation, the operation keys can be pressed by the foreign object sandwiched between the flipper and the operation keys even if the flipper is closed to cause any malfunction unintended by the user. In order to resolve such a problem, JP-A 05-44217 discloses a technology of forcibly disabling the function of the operation keys when the flipper is closed.

In the case of a foldable mobile phone, since a user can relatively easily perceive any foreign objects sandwiched between the upper body and the lower body, it is not necessary for the user to be concerned about any malfunction of the operation keys when the mobile phone is in the closed state.

However, the foldable mobile phone is increasingly reduced in thickness in recent years. Accordingly, even when the lower body is overlaid with the upper body, pressure can be applied to part of the upper body to partially deform the upper body when the mobile phone is put in the pocket of the user. As a result, the operation keys can be unintentionally pressed. As described above, when the power key in the operation keys is pressed, the mobile phones in the standby mode can be unintentionally turned off or the mobile phone can be unintentionally turned on despite the fact that the user turned off the mobile phone.

In order to resolve such problems, there is a method of disabling the functions of all the operation keys when the mobile phone is in the closed state, as disclosed in JP-A 05-44217. However, this method possibly causes any delay time immediately after the upper body is opened before key input is enabled. In addition, some operation keys (for example, side keys) must be operable even when the upper body is closed. Accordingly, it is not desired to disable all the operation keys by the technology disclosed in JP-A 05-44217.
Furthermore, it is necessary to provide separate processing circuits in order to separately control the normal operation keys (the keys overlaid with the upper bodies) and the side keys, thus increasing the number of the parts.

Since the electronic devices, such as the mobile phones, have shorter development cycles and higher publicity, it is necessary to achieve stable and accurate operation quality. Accordingly, it is preferred that the level of system change of software or hardware be as low as possible when new functions are added to products in related art.

### SUMMARY OF THE INVENTION

Accordingly, it is an object of the present invention to provide an electronic device, a mobile phone, and a method of controlling the electronic device that are capable of preventing an occurrence of malfunction even if the operation keys are unintentionally pressed in the non-operation state and realizing the functions by lower-level system change.

According to an embodiment of the present invention, an electronic device includes a first body; an operation key provided on the operation surface of the first body; a cover unit that is connected to the first body and that switches between an open state where the operation keys are exposed and a closed state where the operation keys are covered with the cover unit; an opening-closing detecting unit configured to detect opening and closing of the cover unit; and a key depression determining unit configured to determine that depression of the operation key is effective if the time during which the operation key is pressed exceeds a predetermined determination time. The key depression determining unit sets the predetermined determination time to a first determination time if the opening-closing detecting unit detects that the cover unit is opened and sets the predetermined determination time to a second determination time longer than the first determination time if the opening-closing detecting unit detects that the cover unit is closed.

According to another embodiment of the present invention, a mobile phone includes a first body; an operation key provided on the operation surface of the first body; a cover unit that is connected to the first body and that switches between an open state where the operation key is exposed and a closed state where the operation key is covered with the cover unit; an opening-closing detecting unit configured to detect opening and closing of the cover unit; and a key depression determining unit configured to determine that depression of the operation key is effective if the time during which the operation key is pressed exceeds a predetermined determination time. The key depression determining unit sets the predetermined determination time to a first determination time if the opening-closing detecting unit detects that the cover unit is opened and sets the predetermined determination time to a second determination time longer than the first determination time if the opening-closing detecting unit detects that the cover unit is closed.

According to another embodiment of the present invention, a method of controlling an electronic device including a first body, an operation key provided on the operation surface of the first body, and a cover unit that is connected to the first body and that switches between an open state where the operation key is exposed and a closed state where the operation key is covered with the cover unit includes the steps of detecting opening and closing of the cover unit and determining that depression of the operation keys is effective if the time during which the operation key is pressed exceeds a predetermined determination time. The determining step sets the predetermined determination time to a first determination time if the detecting step detects that the cover unit is opened and sets the predetermined determination time to a second determination time longer than the first determination time if the detecting step detects that the cover unit is closed.

The electronic device, the mobile phone, and the method of controlling the electronic device according to the embodiments of the present invention can prevent an occurrence of malfunction even if the operation keys are unintentionally pressed in the non-operation state and can realize the functions by lower-level system change.

### BRIEF DESCRIPTION OF THE DRAWINGS

Figs. 1A and 1B are exemplary external views of an electronic device according to a first embodiment of the present invention;
Fig. 2 is a block diagram showing an example of the configuration of the electronic device according to the first embodiment of the present invention;
Fig. 3 is a flowchart showing an example of a key depression determining process in the electronic device according to the first embodiment of the present invention; and
Figs. 4A and 4B are exemplary external views of an electronic device according to a second embodiment of the present invention.

### DESCRIPTION OF THE PREFERRED EMBODIMENTS

Exemplary embodiments of an electronic device according to the present invention will herein be described with reference to the attached drawings.

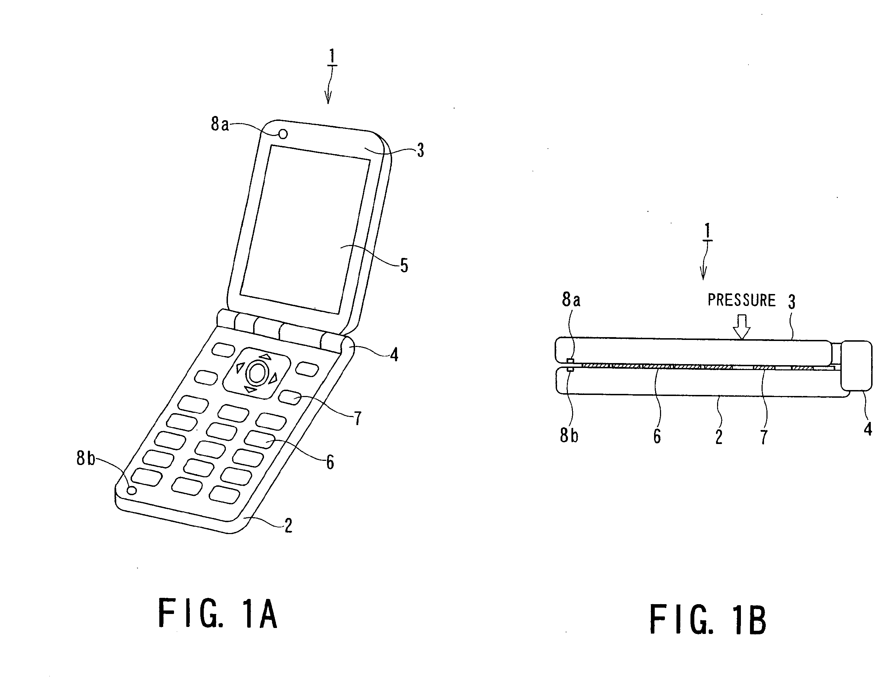

Figs. 1A and 1B are exemplary external views of a foldable mobile phone that is a typical example of an electronic device 1 according to a first embodiment of the present invention.

The electronic device 1 has a lower body (a first body) 2 and an upper body (cover: a second body) 3. The upper body 3 is rotatably connected to the lower body 2 via a hinge unit 4.

Fig. 1A is a perspective view of the electronic device 1 when the upper body 3 is opened (in an operation state). Fig. 1B is a side view of the electronic device 1 when the upper body 3 is closed (in a non-operation state).

As shown in Fig. 1A, multiple operation keys 6 are provided on the operation surface of the lower body 2. The operation keys 6 include, for example, numeric keys from "0" to "9", symbol keys such as "#" and "*", "selection" keys displayed as four arrows: left, right, top, and bottom arrows, a "determination" key surrounded by the "selection" keys, and a "special" key used for invoking certain application software, such as an e-mail application. The operation keys 6 also include a power key 7 used for turning on or off the electronic device 1.

The upper body 3 has a display unit 5, such as a liquid crystal display, as shown in Fig. 1A.

The operation keys 6 are provided on the operation surface of the lower body 2 and the display unit 5 is provided on a surface of the upper body 3, which opposes the operation surface of the lower body 2 on which the operation keys 6 are provided, so that a user can operate the operation keys 6 while viewing the display unit 5 in the operation state in Fig. 1A where the upper body 3 is opened.

In the non-operation state, as shown in Fig. 1B, the upper body 3 is closed to cover the operation keys 6 (including the power key 7). The operation keys 6 are protected by the upper body 3. Accordingly, the operation keys 6 have been rarely pressed despite the intention of the user even when the user carries the electronic device 1 in the closed state in his/her bag or pocket.

However, as described above, the electronic device 1, such as the mobile phone, is increasingly reduced in thickness and weight. Accordingly, the upper body 3 (including the lower body 2 for some cases) is prone to be deformed, compared with the upper bodies of devices in the related art. For example, when the user sits on a chair with the electronic device 1 put in his/her hip-pocket, pressure can be applied to part of the upper body 3 to deform the upper body 3 toward the operation keys 6, as shown by an arrow in Fig. 1B. This deformation causes part of the operation keys 6 to be unintentionally pressed to cause any malfunction unintended by the user.

Particularly when the power key 7 in the operation keys 6 is pressed, the effect of the depression becomes heavier. Specifically, the electronic device 1 in the standby mode is unintentionally turned off or the electronic device 1 is unintentionally turned on despite that fact that the user turned off the electronic device 1.

The electronic device 1 according to the first embodiment of the present invention has a function of preventing any malfunction unintended by the user in the non-operation state.

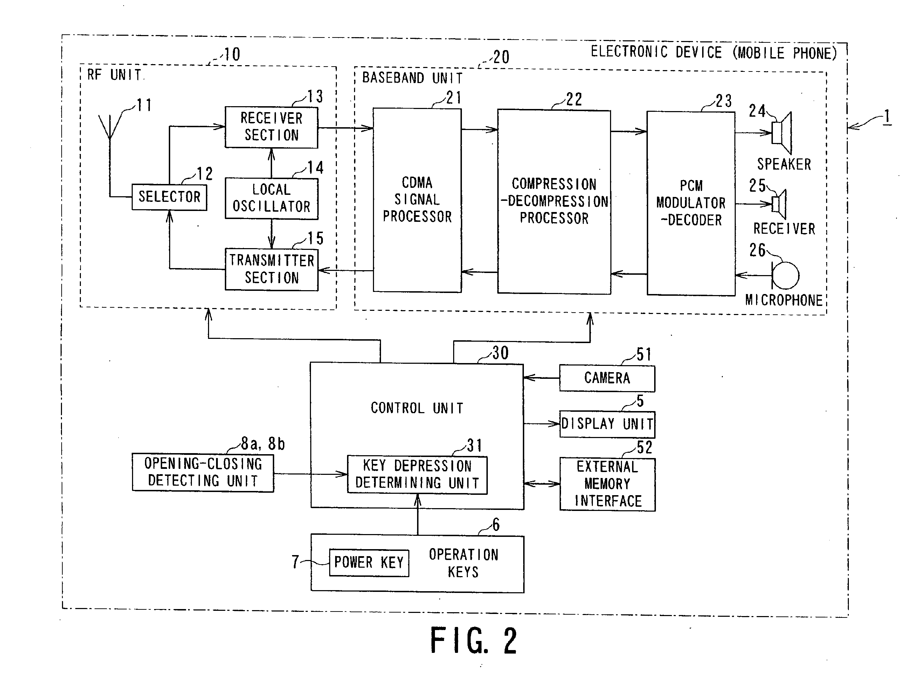

Fig. 2 is a block diagram showing an example of the configuration of the electronic device 1 (for example, a mobile phone) according to the first embodiment of the present invention.

The electronic device 1 includes an RF unit 10, a baseband unit 20, a control unit 30, and the operation keys 6 including the power key 7. The electronic device 1 also includes a camera 51, the display unit 5, an external memory interface 52 as peripheral devices.

The electronic device 1 further includes opening-closing detecting units 8a and 8b used for detecting opening and closing of the lower body 2 and the upper body 3. For example, the opening-closing detecting unit 8a is a magnet provided in an inner portion near the upper end of the upper body 3 and the opening-closing detecting unit 8b is a magnetic sensor, such as a hole element, provided in an inner portion near the lower end of the lower body 2, as shown in Figs. 1A and 1B. When the upper body 3 is closed to cover the lower body 2, the magnet comes close to the magnetic sensor to generate an electrical signal in the magnetic sensor. The presence of this electrical signal indicates that the upper body 3 is closed to cover the lower body 2.

The opening-closing detecting units 8a and 8b are not restricted to the combination of the magnet and the magnetic sensor. Any opening-closing detecting units can be used as long as they detect the opening and closing of the lower body 2 and the upper body 3. For example, a mechanical detection mechanism or an optical detection mechanism may be used as the opening-closing detecting units 8a and 8b.

The RF unit 10 includes an antenna 11, a selector 12, a receiver section 13, a local oscillator 14, and a transmitter section 15. The transmitter section 15 performs frequency conversion to a signal supplied from the baseband unit 20 with a local signal generated by the local oscillator 14, amplifies the signal, and transmits the amplified signal to a base station through the selector 12 and the antenna 11. A signal transmitted from the base station is supplied to the receiver section 13 through the antenna 11 and the selector 12 and is converted into a baseband signal with the local signal.

The baseband unit 20 includes a CDMA signal processor 21, a compression-decompression processor 22, a PCM modulator-decoder 23, a speaker 24, a receiver 25, and a microphone 26.

A voice received by the microphone 26 is digitized by the PCM modulator-decoder 23 and the digitized voice is compressed by the compression-decompression processor 22. The compressed voice is modulated by the CDMA signal processor 21 by a certain CDMA method and is supplied to the RF unit 10. A baseband signal supplied from the RF unit 10 is subjected to processing in the reverse direction. Specifically, the baseband signal is demodulated by the CDMA signal processor 21, is decompressed by the compression-decompression processor 22, and is converted into an analog audio signal by the PCM modulator-decoder 23. The analog audio signal is supplied to the speaker 24 or the receiver 25.

The control unit 30 controls the RF unit 10 and the antenna 11 and also controls the entire electronic device 1. The control unit 30 further controls the camera 51, the display unit 5, and the external memory interface 52.

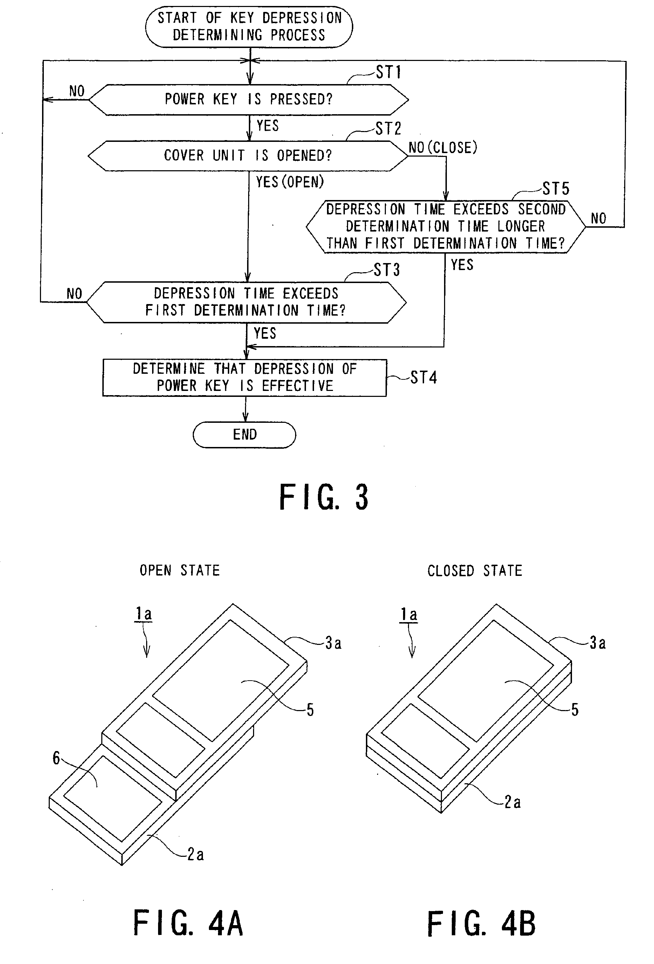

The control unit 30 is provided with a key depression determining unit 31 that performs key depression determination on the basis of a depression signal input with the operation keys 6. The key depression determination is a process typical of the electronic device 1 according to the first embodiment of the present invention. The key depression determining process will now be described with reference to a flowchart shown in Fig. 3.

Although the power key 7 in the operation keys 6 is exemplified in the flowchart in Fig. 3, the determination of whether any of the operation keys 6 is pressed is basically performed in the same manner as in the power key 7.

Referring to Fig. 3, in Step ST1, the key depression determining unit 31 determines whether the power key 7 is pressed. In Step ST2, the key depression determining unit 31 determines whether the cover (the lower body 2) is opened. This determination is based on an output from the opening-closing detecting units 8a and 8b.

If the key depression determining unit 31 determines in Step ST2 that the cover (the lower body 2) is opened (the operation state), then in Step ST3, the key depression determining unit 31 determines whether the time during which the power key 7 is pressed exceeds a first determination time. The power key 7 can be pressed for a longer time (long depression) and the first determination time is typically set to about one to two seconds. While the user continues to press the power key 7, the loop from Step ST1 to Step ST3 is repeated. If the time during which the power key 7 is pressed exceeds the first determination time, then in Step ST4, the key depression determining unit 31 determines that the depression of the power key 7 is effective. In other words, if the user continues to press the power key 7 for about one to two seconds, the key depression determining unit 31 determines that the depression of the power key 7 is effective. If the user stops pressing the power key 7 within the first determination time, the determination in Step ST3 is negative. The process goes back to Step ST1 and the key depression determining unit 31 waits while repeating the determination in Step ST1 until the user presses the power key 7 next.

After the key depression determining unit 31 determines in Step ST4 that the depression of the power key 7 is effective, the process proceeds according to the normal operation sequence. Specifically, if the key depression determining unit 31 determines that the depression of the power key 7 is effective while the electronic device 1 is operating and is in the standby mode, a turning-off sequence (termination sequence) is started. If the key depression determining unit 31 determines that the depression of the power key 7 is effective while the electronic device 1 is turned off, a turning-on sequence (start sequence) is started.

On the other hand, if the key depression determining unit 31 determines in Step ST2 that the cover (the lower body 2) is closed (the non-operation state), then in Step ST5, the key depression determining unit 31 determines whether the time during which the power key 7 is pressed exceeds a second determination time longer than the first determination time (about one to two seconds). The second determination time is set to, for example, about three minutes or longer.

When the user is moving with the electronic device 1 in the closed state in his/her bag or pocket, any pressure is often accidentally applied to the closed cover (the lower body 2). Accordingly, even if the cover (the lower body 2) is temporarily deformed to press the power key 7, it is unlikely that the depression time continues for three minutes or longer. Consequently, the second determination time is set to a time (for example, about three minutes) sufficiently longer than the first determination time to determine that the depression of the power key 7 caused by the temporary deformation of the cover (the lower body 2) is ineffective (the negative determination in Step ST5). As a result, it is possible to prevent any malfunction caused by the accidental depression of the power key 7. The second determination time may be appropriately set to a time period longer than the first determination time depending on the product specifications.

It is not possible to eliminate the possibility that the power key 7 is pressed for a time period longer than three minutes because of any deformation of the cover (the lower body 2). However, in such a case, the second determination time has only to set to a longer time period, for example, one hour or longer.

Steps ST1, ST3, and ST4 in Fig. 3 are included in key depression determining processes in the related art whereas Steps ST2 and ST5 are newly added to the key depression determining process in the first embodiment of the first invention. As described above, the first embodiment of the present invention is realized only by slightly varying the processes in the related art, so that the above-described effect of preventing any malfunction can be achieved with little variation of the system configuration. Consequently, it is possible to reduce the development cost and it is also possible to reduce the possibility of causing any defect involved in the system change.

Figs. 4A and 4B are exemplary external views of an electronic device 1a according to a second embodiment of the present invention. The electronic device 1a in the second embodiment of the present invention differs from the electronic device 1 in the first embodiment of the present invention in that an upper body (cover) 3a and a lower body 2a are slidably connected to each other via a sliding unit (not shown). Fig. 4A shows an open state where the lower body 2a is not completely covered with the upper body 3a. Fig. 4B shows a closed state where the lower body 2a is covered with the upper body 3a.

The operation keys 6 in a lower portion on the surface of the lower body 2a are exposed in the open state whereas the operation keys 6 are covered with the upper body 3a to be protected in the closed state. However, even in the closed sate, any external pressure can cause a deformation and the operation keys 6 on the lower body 2a can be pressed to cause any malfunction if the upper body 3a is thin.

In order to prevent such malfunction, the key depression determining process shown in Fig. 3 is performed also in the slide electronic device 1a according to the second embodiment of the present invention. Since the configuration and operation of the slide electronic device 1a are basically similar to those of the electronic device 1 according to the first embodiment of the present invention, a description of the configuration and operation of the slide electronic device 1a is omitted herein.

As described above, with the electronic device 1 and the electronic device 1a according to the embodiments of the present invention, it is possible to prevent an occurrence of malfunction even if the operation keys are unintentionally pressed in the non-operation state and it is also possible to realize the functions with lower-level system change.

It should be understood by those skilled in the art that various modifications, combinations, sub-combinations and alterations may occur depending on design requirements and other factors insofar as they are within the scope of the appended claims or the equivalents thereof.

## Claims

1. An electronic device comprising:
a first body;
an operation key provided on the operation surface of the first body;
a cover unit that is connected to the first body and that switches between an open state where the operation key is exposed and a closed state where the operation key is covered with the cover unit;
an opening-closing detecting unit configured to detect opening and closing of the cover unit; and
a key depression determining unit configured to determine that depression of the operation key is effective if the time during which the operation key is pressed exceeds a predetermined determination time,
wherein the key depression determining unit sets the predetermined determination time to a first determination time if the opening-closing detecting unit detects that the cover unit is opened and sets the predetermined determination time to a second determination time longer than the first determination time if the opening-closing detecting unit detects that the cover unit is closed.

2. The electronic device according to Claim 1,
wherein the operation key includes a power key used for turning on and off the electronic device.

3. The electronic device according to Claim 1, further comprising a hinge unit,
wherein the cover unit is a second body provided with a display unit, and
wherein the second body is rotatably connected to the first body via the hinge unit.

4. The electronic device according to Claim 1, further comprising a sliding mechanism,
wherein the cover unit is a second body provided with a display unit, and
wherein the first body and the second body are slidably connected to each other via the sliding mechanism.

5. A mobile phone comprising:
a first body;
an operation key provided on the operation surface of the first body;
a cover unit that is connected to the first body and that switches between an open state where the operation key is exposed and a closed state where the operation key is covered with the cover unit;
an opening-closing detecting unit configured to detect opening and closing of the cover unit; and
a key depression determining unit configured to determine that depression of the operation key is effective if the time during which the operation key is pressed exceeds a predetermined determination time,
wherein the key depression determining unit sets the predetermined determination time to a first determination time if the opening-closing detecting unit detects that the cover unit is opened and sets the predetermined determination time to a second determination time longer than the first determination time if the opening-closing detecting unit detects that the cover unit is closed.

6. The mobile phone according to Claim 5,
wherein the operation key includes a power key used for turning on and off the mobile phone.

7. The mobile phone according to Claim 5, further comprising a hinge unit,
wherein the cover unit is a second body provided with a display unit, and
wherein the second body is rotatably connected to the first body via the hinge unit.

8. The mobile phone according to Claim 5, further comprising a sliding mechanism,
wherein the cover unit is a second body provided with a display unit, and
wherein the first body and the second body are slidably connected to each other via the sliding mechanism.

9. A method of controlling an electronic device including a first body, an operation key provided on the operation surface of the first body, and a cover unit that is connected to the first body and that switches between an open state where the operation key is exposed and a closed state where the operation key is covered with the cover unit, the method comprising the steps of:
detecting opening and closing of the cover unit; and
determining that depression of the operation key is effective if the time during which the operation key is pressed exceeds a predetermined determination time,
wherein the determining step sets the predetermined determination time to a first determination time if the detecting step detects that the cover unit is opened and sets the predetermined determination time to a second determination time longer than the first determination time if the detecting step detects that the cover unit is closed.

10. The method of controlling the electronic device according to Claim 9,
wherein the operation key includes a power key used for turning on and off the electronic device.

11. The method of controlling the electronic device according to Claim 9,
wherein the cover unit is a second body provided with a display unit, and
wherein the second body is rotatably connected to the first body via a hinge unit.

12. The method of controlling the electronic device according to Claim 9,
wherein the cover unit is a second body provided with a display unit, and
wherein the first body and the second body are slidably connected to each other via a sliding mechanism.
